# FASCICULE DE BREVET EUROPEEN

(11) **EP 3 359 791 B1**
(45) Date de publication et mention de la délivrance du brevet: **25.11.2020**
(21) Numéro de dépôt: 16790669.2
(22) Date de dépôt: 05.10.2016
(51) Int. Cl.: F02C 7/36, F01D 15/12, B64D 35/04, F02C 3/107, F16H 1/20

(54) **TURBOMOTEUR À SOUFFLANTES ET RÉDUCTION DE VITESSE SUR L'ARBRE DE LA TURBINE DE PUISSANCE**
TURBINENMOTOR MIT GEBLÄSE UND VERRINGERUNG DER GESCHWINDIGKEIT AN DER WELLE DER NUTZTURBINE
TURBINE ENGINE WITH FAN AND REDUCTION OF SPEED ON THE SHAFT OF THE POWER TURBINE

(30) Priorité: 05.10.2015 FR 1559444; 05.10.2015 FR 1559445
(43) Date de publication de la demande: 15.08.2018
(73) Titulaire: Safran Aircraft Engines, 75015 Paris (FR)
(72) Inventeur: CURLIER, Augustin, Marc, Michel, 77550 Moissy-Cramayel Cedex (FR)
(74) Mandataire: Gevers & Orès
(86) Numéro de dépôt international: PCT/FR2016/052562
(87) Numéro de publication internationale: WO 2017/060623

(56) Documents cités:
- GB-A- 1 338 499
- RU-C2- 2 176 027
- US-A- 2 253 977
- US-A1- 2012 292 440

## Description

### Domaine de l'invention

La présente invention concerne le domaine aéronautique et porte sur un ensemble de propulsion comportant au moins une soufflante entraînée par un moteur. Elle vise plus particulièrement un système de transfert de puissance entre le moteur et la soufflante qu'il entraîne.

### Etat de l'art

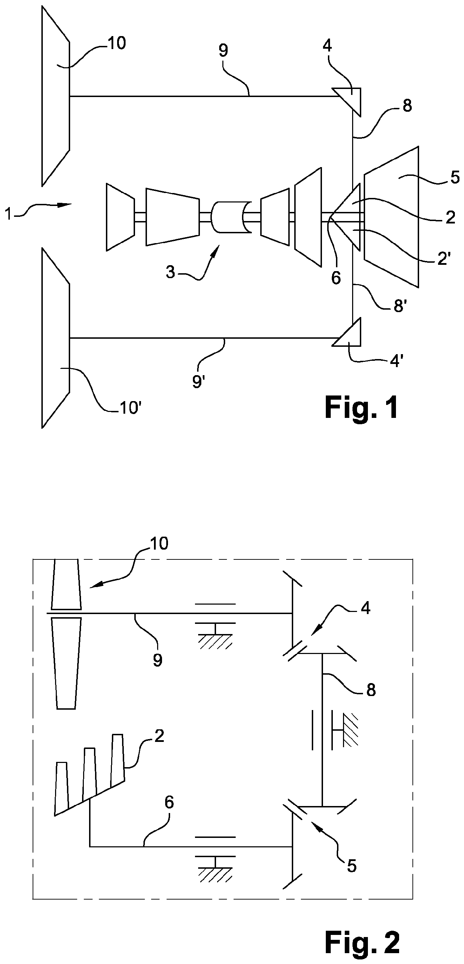

Le présent déposant a entrepris des travaux portant sur l'entraînement d'une architecture d'ensemble de propulsion avec au moins une soufflante, voire avec des soufflantes distribuées. Ceux ci ont pour objectifs de rechercher une optimisation du rendement propulsif grâce à un fort taux de dilution, tout en conservant une garde au sol acceptable et des soufflantes de taille réduite ayant un régime différent de celui de la turbine. Un schéma de principe d'un ensemble de propulsion 1 avec au moins une soufflante est représenté sur les figures 1 et 2. Un générateur de gaz 3, comprend de façon classique un ensemble de compression alimentant en air une chambre de combustion annulaire ; les gaz issus de la chambre entraînent une ou plusieurs turbines reliées mécaniquement au compresseur et ici une turbine de puissance 5. Cette dernière est solidaire d'un arbre de puissance 6 coaxial au générateur de gaz 3. Cet arbre de puissance 6 entraîne par le biais d'engrenages coniques appropriés deux arbres radiaux intermédiaires 8 et 8' disposés en particulier à angle droit par rapport à l'axe de l'arbre de puissance 6. Les arbres radiaux intermédiaires entraînent chacun un arbre de soufflante 9, 9' déporté, c'est-à-dire d'axe décalé par rapport à l'axe du générateur de gaz. La transmission de puissance est effectuée par le moyen de premiers engrenages 2 et 2' à pignons coniques entre l'arbre 6 et les arbres radiaux 8 et 8' et de seconds engrenages 4 et 4' à pignons coniques entre les arbres radiaux 8, 8' et les arbres de soufflantes 9 et 9'. Les arbres des soufflantes 9 et 9' entraînent chacun une soufflante 10, 10' d'axe déporté à celui du moteur. Un tel agencement permet d'atteindre les objectifs visés ci-dessus.

Les documents US1338499, US2012/292440, US2253977 et RU2176027 font partie de l'art antérieur de la présente invention.

La solution au problème de transmission entre la turbine libre et le ou les arbres de soufflantes consiste à utiliser, pour chacune des soufflantes, des engrenages coniques simples à 45° : un premier engrenage avec deux roues de même diamètre l'une sur l'arbre de la turbine libre et l'autre sur l'arbre radial et un second engrènement conique à 45° avec deux roues de diamètres différents reliant l'arbre radial à celui de la soufflante. A l'inverse, le premier engrenage peut avoir deux roues de diamètre différents et le second engrènement peut avoir deux roues de même diamètre.

Le pignon d'entrée du premier engrenage 2 de l'ensemble représenté sur la figure 2 est dimensionné de manière à tenir les contraintes relatives au couple de turbine, ce qui donne un diamètre primitif minimal incompressible pour celui-ci, et fixe donc ses dimensions. Le rapport de réduction du renvoi d'angle s'obtient alors en jouant sur la taille de la roue fixée sur l'arbre radial. Pour des rapports de réduction élevés, notamment supérieurs à 2.5, on constate que la roue en prise conique directe avec le pignon central pose alors un problème d'encombrement à cause du diamètre important de celle-ci.

En raison du faible espace disponible, il se pose le problème d'intégrer une roue de grand diamètre à distance de l'axe moteur, à l'intérieur du carter d'échappement du générateur de gaz où doit être disposé l'engrenage 2 de renvoi d'angle.

Il faut en outre tenir compte des phénomènes dynamiques parasites que pourraient engendrer deux roues de grand diamètre en rotation selon un axe perpendiculaire à l'axe moteur et à distance de l'axe moteur.

De ce point de vue, il serait également approprié d'avoir un renvoi d'angle interne au générateur de gaz dont le rapport de réduction serait proche de 1, voire inférieur à 1, afin de limiter au maximum les dimensions des différentes roues dentées et de faciliter leur intégration et de relaxer les contraintes de torsion vues par les arbres radiaux.

La présente invention a pour objectif de remédier à ce problème.

En particulier elle a pour objectif un agencement qui permet de réduire l'encombrement de la roue d'entraînement de l'axe radial intermédiaire.

### Exposé de l'invention

On parvient à réaliser cet objectif avec un ensemble de propulsion d'un aéronef comprenant au moins une turbine, au moins une soufflante, et un mécanisme de transmission de puissance entre la turbine et la soufflante, le mécanisme de transmission de puissance comprenant un réducteur de vitesse avec une entrée et une sortie de mouvement, l'entrée étant reliée à la turbine et la sortie reliée à la soufflante, le réducteur de vitesse étant un réducteur épicycloïdal avec un pignon planétaire, des satellites et une couronne, le pignon planétaire formant l'entrée et la couronne formant la sortie du réducteur, et l'axe de rotation des satellites étant incliné par rapport à l'axe du pignon planétaire, des roues formant les satellites engrènent d'une part sur des dents du pignon planétaire d'autre part sur des dents de la couronne formant une zone annulaire centrée sur l'axe de l'arbre de turbine.

En disposant un réducteur de vitesse au niveau de la soufflante, on peut obtenir un rapport de réduction global élevé entre le module de la soufflante et celui de la turbine libre.

Nous répondons également au besoin de ménager de l'espace au niveau de la turbine et du carter formant l'enveloppe de cette partie du moteur. L'encombrement radial est réduit grâce à l'inclinaison du mécanisme d'engrènement.

Suivant une caractéristique de l'invention, la soufflante est d'axe décalé par rapport à l'axe de la turbine.

Suivant une autre caractéristique de l'invention, la soufflante est d'axe coaxial avec l'axe de la turbine.

Suivant une autre caractéristique de l'invention, l'entrée du réducteur de vitesse est dans le prolongement de l'axe de la turbine.

En particulier, l'arbre de la turbine est engagé dans l'axe du pignon planétaire central. Le réducteur est ainsi dans son prolongement.

En disposant un réducteur de vitesse dans l'axe de la turbine d'entraînement de la soufflante on peut réduire le diamètre de la roue d'entrée du mécanisme de transmission de puissance.

Dans la présente invention, les termes « pignon » et « couronne » sont également désignés sous le terme « roue » ou « roue dentée ».

Les roues des satellites sont guidées en rotation et supportées par un châssis formant stator qui peut être agencé de manière à ce que les roues des satellites forment un angle avec l'axe de la turbine. L'orientation des satellites permet également d'obtenir un réducteur avec une forme conique ou sphérique qui optimise la place disponible dans le cône d'échappement. L'angle d'inclinaison des roues de satellite est déterminé (à iso encombrement axial) par le rapport de réduction du réducteur de vitesse ensemble avec le rapport des diamètres primitifs entre satellites et couronne ainsi que par les contraintes de flexion et de pression admissibles dans les dents (l'augmentation du diamètre primitif du planétaire réduit les contraintes dans celui-ci à iso couple) et la longueur totale du réducteur.

Ainsi les pignons des satellites peuvent avoir un diamètre supérieur à celui du pignon du planétaire d'entrée. Le rapport de réduction du réducteur de vitesse épicycloïdal dépend uniquement du rapport entre le diamètre du planétaire d'entrée et le diamètre de la couronne de sortie. Le réducteur est ici un réducteur sphérique pour une transmission entre la couronne et l'arbre radial avec des roues à petit diamètre (proche de diamètre du planétaire d'entrée) et un rapport de réduction le plus faible possible. Grâce au réducteur de vitesse sphérique, un engrenage de renvoi d'angle est aménagé sur la toile de la couronne de sortie, à petit diamètre ce qui permet de transmettre au moyen de petites roues et à vitesse réduite le mouvement aux soufflantes. En revanche, un réducteur de vitesse épicycloïdal classique avec une couronne et un renvoi d'angle aménagé sur la couronne à haut diamètre nécessite un réducteur réduisant la vitesse puis un renvoi d'angle la ré accélérant ce qui multiplie les pertes de rendement dans l'engrenage.

Un réducteur sphérique permet également un encombrement radial réduit pour le même rapport de réduction. Ces caractéristiques correspondent bien avec l'encombrement disponible sous turbine.

Selon un mode de réalisation préféré, la couronne comprend un premier pignon engrenant avec les satellites et un deuxième pignon concentrique au premier formant la sortie du réducteur de vitesse. Plus particulièrement, le deuxième pignon est de rayon inférieur à celui du premier pignon.

Conformément à une autre caractéristique, le mécanisme de transmission de puissance comprend au moins un arbre intermédiaire orienté selon une direction radiale par rapport à l'axe de la turbine, l'arbre intermédiaire étant en prise avec la sortie du réducteur de vitesse.

Suivant un autre mode de réalisation de l'invention, le mécanisme de transmission de puissance comprend deux joints homocinétiques.

Les joints homocinétiques sont agencés entre le réducteur de vitesse et la turbine.

Par exemple, l'arbre de turbine de puissance peut porter un pignon conique qui attaque une roue de diamètre sensiblement identique. La transmission est à ce niveau sans réduction de vitesse de la ligne d'arbre.

Ce premier renvoi d'angle peut être agencé aussi avec réduction de vitesse de la ligne d'arbre. Cette option avec réduction de vitesse est avantageuse dans le cas où il est prévu un très grand rapport de réduction total. Elle permet de limiter les dimensions du réducteur de vitesse principal sur l'arbre de soufflante. Dans ce cas, le rapport de réduction de l'étage de renvoi reste faible, lié à des considérations, d'une part d'intégration du renvoi d'angle dans le carter d'échappement et de l'arbre radial dans les bras de carter et, d'autre part de tenue du pignon d'arbre de turbine aux contraintes de flexion et à la pression. L'arbre radial est ainsi un arbre rapide de vitesse de rotation sensiblement identique à celle de la turbine de puissance.

Suivant une caractéristique de ce mode de réalisation, le mécanisme de transmission de puissance comprend un premier élément d'arbre intermédiaire orienté selon une direction radiale par rapport à l'axe de la turbine, le premier élément d'arbre intermédiaire engrenant sur l'arbre de la turbine.

Suivant encore une autre caractéristique, le mécanisme de transmission comprend un deuxième élément d'arbre intermédiaire radial, entre ledit premier élément d'arbre et le deuxième élément d'arbre étant agencée une liaison comprenant les deux joints homocinétiques.

Selon encore une autre caractéristique, la liaison entre les deux éléments d'arbre intermédiaire comprend une liaison à glissière disposée en série avec les deux joints homocinétiques.

L'invention s'applique avantageusement à un ensemble de propulsion dont la turbine est entraînée par un générateur de gaz.

Elle s'applique plus particulièrement à un ensemble de propulsion dont le générateur de gaz est un moteur à turbine à gaz avec un carter d'échappement comprenant deux viroles concentriques, l'une interne l'autre externe, définissant la veine des gaz moteurs en aval de la turbine.

Selon une caractéristique de l'ensemble de propulsion, le réducteur est logé à l'intérieur de la virole interne.

Conformément à une autre caractéristique, l'arbre intermédiaire traverse les viroles du carter d'échappement.

Conformément à une autre caractéristique, le premier élément d'arbre intermédiaire traverse les viroles du carter d'échappement.

L'invention concerne également un ensemble de propulsion d'un aéronef comprenant une turbine, au moins une soufflante entraînée par un arbre d'axe décalé par rapport à l'axe de la turbine et un mécanisme de transmission de puissance entre la turbine et la soufflante, caractérisé par le fait que le mécanisme de transmission de puissance comprend un réducteur de vitesse sur l'arbre d'entrainement de la soufflante, le réducteur de vitesse étant un engrenage épicycloïdal avec un pignon planétaire, des satellites et une couronne, le pignon planétaire formant l'entrée du réducteur.

### Présentation des figures

D'autres caractéristiques et avantages ressortiront de la description qui suit d'un mode réalisation de l'invention non limitatif en référence aux dessins annexés sur lesquels
La figure 1 est une représentation schématique d'une architecture d'ensemble de propulsion d'aéronef ;
La figure 2 montre un agencement des pignons coniques dans l'entraînement de l'arbre de soufflante par l'arbre de la turbine selon l'architecture de la figure 1 ;
La figure 3 montre une représentation schématique de la transmission de puissance conforme à un mode de réalisation de l'invention ;
La figure 4 montre un exemple d'intégration de la transmission de puissance de l'invention dans une structure de moteur ;
La figure 5 montre un détail de la transmission de la figure 4 ;
La figure 6 montre un autre détail de la transmission de la figure 4 ;
Les figures 7a et 7b montrent une représentation schématique de la transmission de puissance conforme à un mode de réalisation, qui n'est pas couvert par les revendications, avec un train épicycloïdal plan ;
La figure 8 montre une représentation schématique de la transmission de puissance conforme à un autre mode de réalisation de l'invention avec un train épicycloïdal dont l'axe des satellites est incliné par rapport à celui du planétaire ;
La figure 9 montre un agencement des paliers de la transmission le long de l'axe de soufflante ; et,
La figure 10 illustre de manière schématique un autre mode de réalisation d'un ensemble de propulsion avec au moins une soufflante en amont d'un générateur de gaz.

### Description détaillée d'un mode de réalisation de l'invention

L'invention concerne un ensemble de propulsion d'une turbomachine d'un aéronef.

L'ensemble de propulsion comprend un générateur de gaz, au moins une soufflante et au moins un mécanisme de transmission de puissance.

Le générateur de gaz comprend d'amont en aval, au moins un compresseur, une chambre de combustion et une turbine.

Dans la présente invention, et de manière générale, les termes « amont » et « aval » sont définis par rapport à la circulation des gaz dans la turbomachine.

Le générateur de gaz comprend une turbine 15 de puissance d'axe longitudinal X. La turbine 15 de puissance est entraînée par les gaz du générateur de gaz. L'axe X de la turbine est coaxial à celui du générateur de gaz. Le mécanisme de transmission de puissance est agencé entre la turbine et une soufflante. Le générateur de gaz est un moteur à turbine à gaz avec un carter d'échappement 30. Ce dernier comprend deux viroles concentriques, une virole interne et une virole externe qui définissent la veine des gaz moteurs en aval de la turbine.

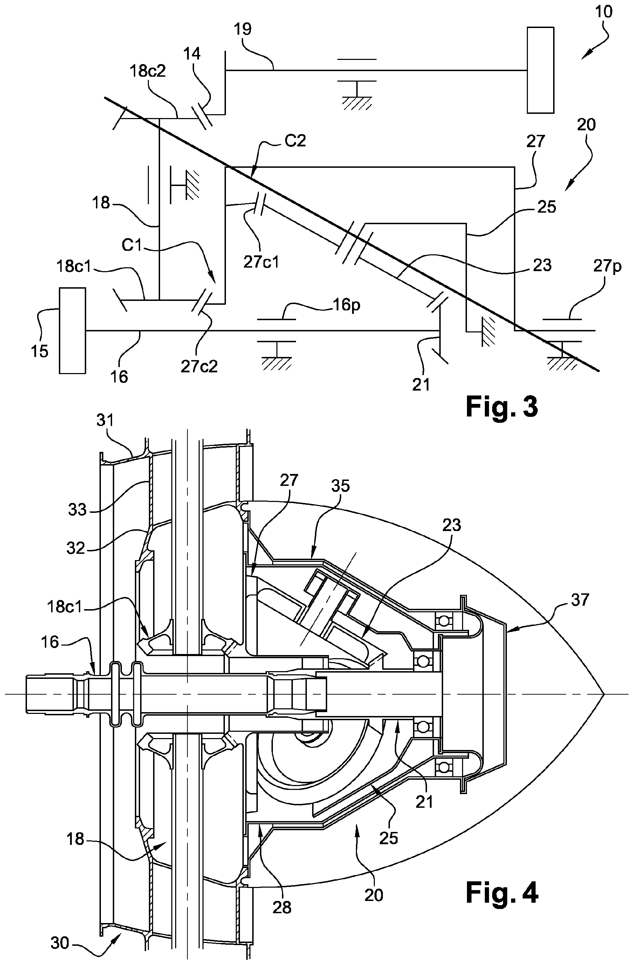

Suivant le mode de réalisation illustré sur la figure 3, l'ensemble de propulsion comprend au moins une soufflante d'axe déporté, décalé par rapport à l'axe du générateur de gaz. Dans le présent exemple, l'ensemble de propulsion comprend deux soufflantes d'axes déportés. Le mécanisme de transmission de puissance est agencé entre la turbine et chaque soufflante.

Le mécanisme de transmission de puissance illustré schématiquement sur la figure 3, comprend au moins un réducteur de vitesse avec une entrée et une sortie en mouvement. L'entrée est reliée à la turbine 15 et la sortie est reliée à la soufflante 10. En particulier, la turbine 15 comprend un arbre 16 de turbine monté rotatif sur un palier 16p solidaire de la structure fixe du moteur. Cet arbre 16 est relié au réducteur de vitesse 20 ici à engrenage épicycloïdal. L'arbre 16 est prolongé axialement jusqu'à une roue dentée 21. Cette dernière forme la roue d'entrée du réducteur. L'axe de la roue 21 est coaxial à l'arbre de turbine 16.

Le réducteur 20 à engrenage épicycloïdal comprend en outre les satellites 23 et la couronne 27. La couronne 27 de forme cylindrique est montée à rotation dans un palier 27p solidaire de la structure fixe du moteur. Les roues formant les satellites 23 engrènent d'une part sur les dents du pignon planétaire 21 et d'autre part sur les dents de la couronne formant une zone annulaire 27c1 centrée sur l'axe de l'arbre 16 de turbine. Les roues 23 de satellites sont supportées dans un châssis 25 fixe solidaire de la structure fixe du moteur. Comme on le voit sur la figure l'axe de rotation des roues satellites n'est pas parallèle à l'axe de l'arbre 16 mais incliné par rapport à celui-ci. L'inclinaison des satellites permet de réduire l'encombrement radial du réducteur par rapport à un dispositif où les axes seraient parallèles entre eux. La sortie du réducteur est formée de la denture annulaire 27c2 de la couronne 27. Cette zone annulaire dentée 27c2 est centrée sur l'axe de l'arbre 16. Son rayon est notamment inférieur à celui de la denture annulaire 27c1 citée plus haut.

La liaison entre la sortie du réducteur et la soufflante 10 est réalisée par au moins un arbre intermédiaire 18. Plus précisément, l'entraînement de la soufflante 10, d'arbre 19 parallèle à l'arbre 16 de turbine, est réalisé par l'arbre intermédiaire 18, radial par rapport à l'arbre 16 de la turbine. Cet arbre intermédiaire 18 est relié d'une part, à son extrémité radialement supérieure, à l'arbre de soufflante 19 par un engrenage de renvoi d'angle 14, celui-ci comprenant le pignon conique 18c2 de l'arbre intermédiaire 18 et d'autre part à son extrémité radialement inférieure par un pignon conique 18c1 à la denture 27c2 annulaire de sortie de la couronne 27. En particulier, le renvoi d'angle au moyen de l'engrenage de renvoi d'angle 14 est réalisé en C1 plutôt qu'en C2 (cf. figure 3) grâce à la configuration du réducteur de vitesse sphérique qui permet et facilite la connexion d'une roue de renvoi de petit diamètre en C1. En effet, le diamètre de la roue est moins important qu'en C2.

Grâce à cet agencement, l'arbre intermédiaire 18 tourne à une vitesse réduite par rapport à celle de l'arbre 16 de turbine. La réduction de vitesse résulte des rapports entre les rayons des pignons et roues dentées, 21/23, 23/27c2, 27c1/27c2 ainsi que de l'inclinaison des roues satellites 23.

De préférence le diamètre du pignon 18c2 n'est pas supérieur à celui du pignon 18c1 pour ne pas accélérer l'arbre de soufflante.

L'inclinaison des roues satellites n'est pas impérative à la fonction de réduction de vitesse mais elle apporte l'avantage supplémentaire d'une réduction du diamètre du réducteur permettant son introduction dans le carter d'échappement d'un moteur d'aéronef.

Les figures 4, 5 et 6 montrent un exemple pratique d'agencement des éléments du mécanisme de transmission de puissance de l'invention, dans la structure d'un moteur comprenant un générateur de gaz à moteur à turbine à gaz.

Le réducteur 20 est disposé en bout de l'arbre 16 de turbine, Il forme un module logé dans une virole 35 de carter structural qui elle-même est solidaire du carter d'échappement 30 du moteur. Ce carter d'échappement comprend une virole 32 radialement intérieure et une virole radialement extérieure 31 reliées par des bras radiaux 33. Ces deux viroles ménagent entre elles un canal annulaire formant la veine des gaz issus de la turbine de puissance. La virole 35 est fermée axialement par un capot 37.

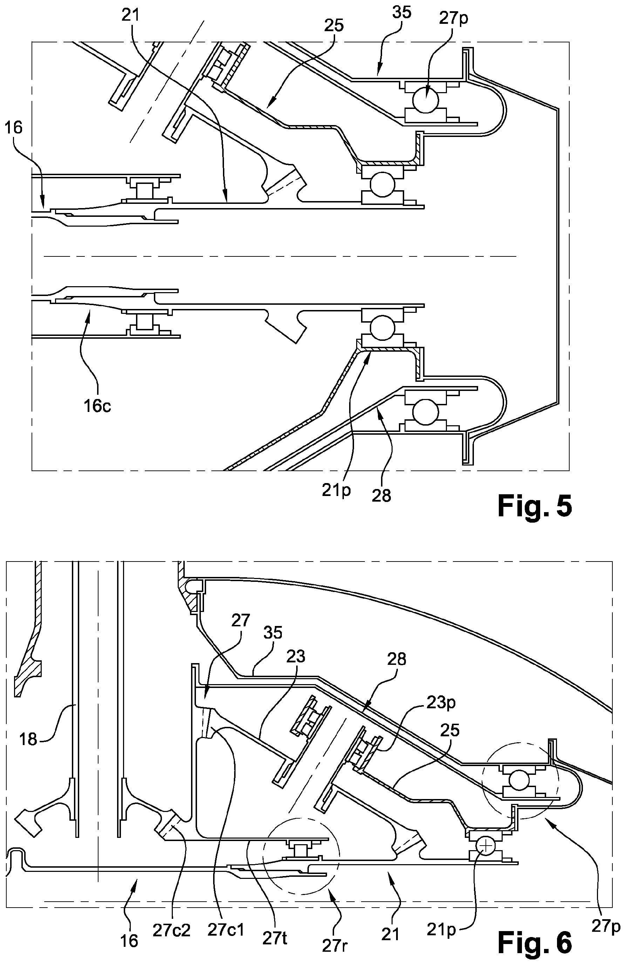

Une virole tournante 28 comprenant la couronne 27 est montée à rotation à l'intérieur de la virole fixe 35 dans un premier palier 27p (cf. figure 5). De manière avantageuse, mais non limitative, le palier 27p est un palier à billes. Le palier 27p disposé en extrémité axiale du réducteur est agencé pour former également une butée axiale. En particulier, la bague intérieure du palier 27p est portée par la virole tournante 28 et la bague extérieure est portée par la virole fixe 35. Un palier à rouleaux (non représenté) est prévu entre la virole tournante 28 et le carter de manière à assurer le guidage en rotation de la virole tournante 28.

La couronne 27 comprend également une portée cylindrique intérieure 27t recouvrant au moins partiellement l'arbre du pignon planétaire 21 et prenant un appui rotatif sur lui par l'intermédiaire d'un palier 27r, par exemple à rouleaux. Plus précisément, le palier 27r est disposé vers l'extrémité distale de la portée cylindrique intérieure 27t. La bague intérieure du palier 27r est portée par la portée cylindrique intérieure 27t et la bague extérieure est portée par le pignon planétaire 21. Cette configuration permet d'avoir un espacement assez important entre paliers rouleaux et billes et d'améliorer la qualité du guidage en rotation de la couronne.

Cet arbre du pignon planétaire 21 est situé dans le prolongement de l'arbre 16 de turbine auquel il est relié par un accouplement à cannelures. A l'opposé des cannelures de l'arbre 16, le pignon planétaire est supporté par un palier 21p formant également butée axiale. De manière avantageuse, le palier 21p est un palier à billes. Le palier 21p est logé dans le châssis 25 support des satellites. En particulier, la bague intérieure du palier 21p est portée par l'extrémité distale de l'arbre du pignon planétaire 21 et la bague extérieure est portée par le châssis. Le châssis est lui-même solidaire de la virole de carter 35. De manière avantageuse, mais non limitative, la couronne 27 est montée rigide et le châssis 25 et l'arbre 16 de turbine sont montés souples de sorte à limiter l'hyperstatisme dans le réducteur, et donc son usure. L'arbre 16 de turbine est souple grâce aux cannelures et aux soufflets sur l'arbre en amont du réducteur. Ainsi, les efforts parasites du générateur de gaz ne sont pas transmis au réducteur. Par ailleurs, les cannelures permettent de transmettre le couple entre les deux arbres mais laissent la possibilité d'un glissement axial limité de l'un par rapport à l'autre pour absorber à ce niveau des déformations de structure en fonctionnement. Le châssis est monté souple grâce à une épingle entourant le palier 27p (cf. figure 5). Ainsi la transmission des vibrations générée par le réducteur à la structure est limitée.

Les roues satellites dont l'axe de rotation coupe celui de l'arbre 16 de turbine, sont par exemple au nombre de trois supportées par le châssis 25 en étant montées dans des paliers 23p. Le guidage en rotation des satellites est assuré par exemple à l'aide de paliers à rouleaux sphériques, permettant de réaliser une liaison rotule équivalente qui rend le réducteur tolérant aux désalignements entre les organes d'entrée et de sortie.

La pièce 27 réalisant la fonction couronne possède ici la particularité de présenter une zone annulaire dentée 27c1 dans laquelle engrènent les roues satellites 23 et également une zone annulaire dentée, située à un diamètre primitif sensiblement plus faible que la précédente, et située par exemple sur la face opposée.

Cette deuxième zone dentée permet de transmettre la puissance aux arbres intermédiaires 18, ici radiaux et est dimensionnée de manière à faciliter l'intégration de la roue interne 18c1 des arbres intermédiaires 18. Le diamètre primitif de la seconde zone annulaire dentée de la couronne est choisi le plus petit possible compte tenu des contraintes mécaniques.

Il est bien entendu indispensable que le diamètre primitif de la roue interne de l'arbre intermédiaire 18 soit au moins égal à celui de cette seconde zone dentée de manière à ne pas augmenter la vitesse de rotation de l'arbre en sortie du réducteur et supprimer l'effet du réducteur.

Pour permettre l'intégration des deux arbres intermédiaire 18 au travers du carter de structure 30, il est nécessaire d'épaissir le profil de ceux-ci.

Par ailleurs, suivant une configuration de l'invention, les arbres intermédiaires 18 sont placés dans un même plan de sorte que le chargement latéral des paliers de la couronne 27 soit limité. De manière alternative, les arbres intermédiaires 18 peuvent être disposés dans des plans différents transversaux par rapport à l'arbre 16 de la turbine. Ainsi, les contraintes mécaniques dues à la disposition des soufflantes sont limitées.

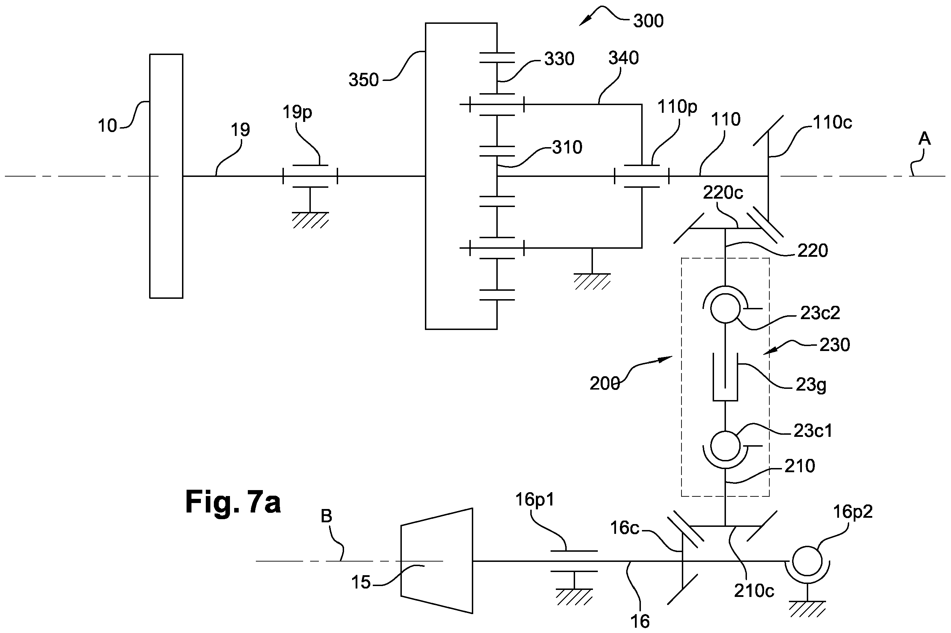

Un deuxième mode de réalisation de l'agencement du mécanisme de transmission de puissance, qui n'est pas couvert par les revendications, est illustré schématiquement sur la figure 7a. Les références numériques correspondantes de l'ensemble de propulsion décrit précédemment dans le premier mode de réalisation sont conservées dans la suite dans la description. En particulier, l'ensemble de propulsion comprend ici deux soufflantes déportées par rapport à l'axe de la turbine. Bien entendu, l'ensemble de propulsion pourrait comprendre une seule soufflante déportée.

Le mécanisme de transmission de puissance comprend au moins un réducteur de vitesse 300 et une transmission radiale 200.

L'arbre 16 de turbine est monté rotatif sur un ensemble de paliers 16p1, 16p2, solidaires de la structure fixe du moteur: un palier 16p1 à rouleaux et un palier 16p2 de butée par exemple un palier à billes.

Cet arbre 16 est relié à la transmission radiale 200 par un renvoi d'angle avec des pignons coniques l'un 16c sur l'arbre de turbine 16 et l'autre 210c sur un premier élément d'arbre 210 intermédiaire radial. Le renvoi d'angle simple dans le générateur de gaz facilite l'intégration de celui-ci dans le carter d'échappement.

Ce premier élément d'arbre 210 est relié à un deuxième élément d'arbre 220 intermédiaire radial par l'intermédiaire d'une liaison 230 de la transmission radiale. La liaison 230 est schématisée ici par deux joints homocinétiques 23c1, 23c2 en série entre eux avec une liaison à glissière 23g. Ces joints homocinétiques sont de type rotule à doigt. Cette combinaison permet de rattraper les déplacements angulaires entre les premier et deuxième éléments d'arbres et aussi les déplacements axiaux entre eux, qui sont susceptibles de survenir lors du fonctionnement de l'ensemble de propulsion en raison des chargements thermiques et mécaniques.

Conformément à un exemple de réalisation, le premier joint homocinétique est un joint Rzeppa. Un tel joint comprend un axe d'entraînement et un axe entraîné ; un bol est solidaire d'un axe et une noix est solidaire de l'autre axe avec interposition de billes. L'agencement entre ces éléments est réalisé de façon à permettre un entraînement de l'axe entraîné à la même vitesse de rotation que l'axe d'entrée tout en admettant un désalignement angulaire entre eux.

Avantageusement, mais non limitativement, le second joint homocinétique est un joint VL coulissant. Il comprend un axe d'entraînement et un axe entraîné ; des billes retenues dans une cage sont mobiles à l'intérieur de gorges croisées, respectivement extérieures et intérieures. Les gorges permettent un déplacement axial d'un axe par rapport à l'autre tout en assurant la transmission de couple. Le second joint peut aussi être un joint de Rzeppa. La liaison entre les deux joints étant alors coulissante, par exemple par le moyen de cannelures glissantes.

Le deuxième élément d'arbre 220 est relié par un renvoi d'angle à un troisième élément d'arbre 110 intermédiaire d'entrainement de soufflante 10. Le renvoi d'angle comprend les deux pignons coniques 220c et 110c.

La soufflante 10 est entrainée par son arbre de soufflante 19 qui est lui-même entrainé par le troisième élément d'arbre 110 au travers le réducteur de vitesse 300 supporté par le module de soufflante. Le réducteur est de préférence à train épicycloïdal avec un planétaire 310, une couronne 350 et des satellites 330. Les satellites 330 sont supportés par un châssis fixe 340, attaché au carter 30 de l'ensemble de propulsion. Les roues formant les satellites 330 engrènent d'une part, sur les dents du pignon planétaire 310 et d'autre part, sur les dents de la couronne 350. Le planétaire 310 engrène avec le jeu de satellites, dont le nombre dépend de la dimension du réducteur, du rapport de réduction et du couple en entrée.

Ces satellites sont, selon un mode de réalisation, à dentures hélicoïdales à double chevrons. Dans ce cas, il y a blocage du degré de liberté en translation sur l'axe de la soufflante entre les différents composants du réducteur. Afin de ne pas subir d'importantes contraintes internes lors de la dilatation axiales de l'environnement sous charge thermique, on restaure le degré de liberté en translation axiale entre chaque composant. On peut par exemple dans ce but utiliser un guidage des satellites par des paliers lisses sans butée axiale et une liaison rotor de soufflante / couronne réalisée à l'aide d'une cannelure non bloquée axialement et donc glissante sur l'axe de la soufflante.

Ces satellites sont selon un autre mode de réalisation à dentures droites. Le degré de liberté en translation axiale est maintenu entre planétaire/satellites et satellites/couronne. Il n'est dans ce cas pas nécessaire d'utiliser des cannelures glissantes et il est possible de privilégier par exemple l'emploi de paliers à rouleaux sphériques pour le guidage de satellites.

Le troisième élément d'arbre 110 est en prise, en entrée du réducteur, avec le planétaire 310 et, en sortie, l'arbre 19 de soufflante est entrainé par la couronne 350 de laquelle il est solidaire. Les arbres 110 et 19, supportés par des jeux de paliers 110p et 19p à la structure fixe de l'ensemble de propulsion, sont ici coaxiaux selon la direction A qui est parallèle et décalée par rapport à la direction B de l'arbre 16 de turbine. De manière avantageuse, mais non limitativement, les paliers 19p et 110p sont respectivement un palier à billes et un palier à rouleaux.

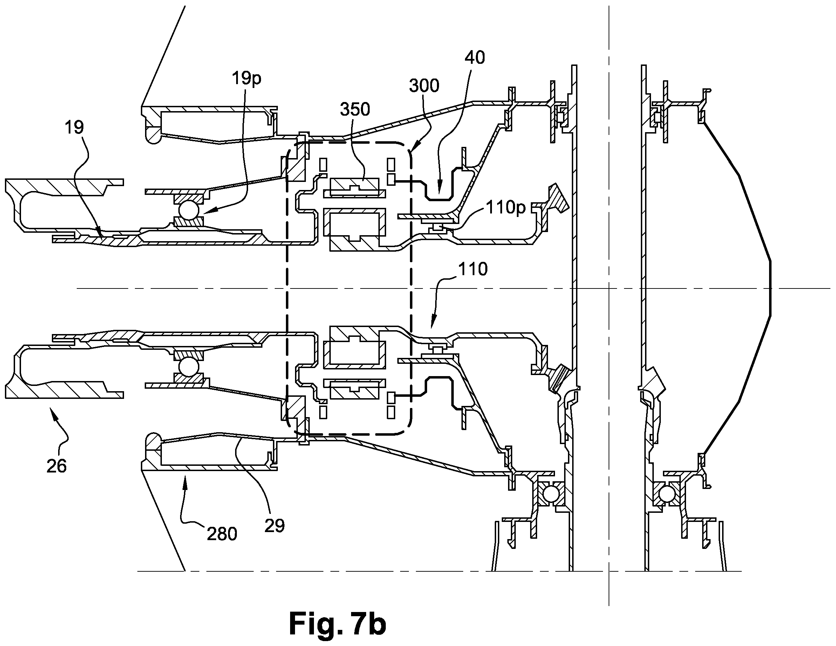

En particulier, comme illustré sur la figure 7b, le troisième élément d'arbre 110 est supporté par le palier à rouleaux 110p lequel est disposé en amont du réducteur de vitesse 300 entre une virole de support 40 et l'arbre 110. La bague intérieure est portée par le troisième élément d'arbre 110 et la bague extérieure est portée par la virole de support. Quant au palier à billes 19p, celui-ci est disposé en aval du réducteur de vitesse 300, à proximité de la soufflante, entre une épingle 29 solidarisée au bras de carter 280 et le rotor de soufflante 26. La bague extérieure est portée par le rotor de soufflante 26 et la bague intérieure est portée par l'épingle 29. Ce palier à billes 19p forme une butée axiale. De la sorte, le rotor de soufflante 26 est guidé en rotation et est maintenu axialement en position.

De manière avantageuse, mais non limitative, la couronne est montée souple et le planétaire est monté rigide.

Ainsi, les premier et deuxième éléments d'arbres 210, 220 radiaux voient un couple plus faible, il s'ensuit un gain en masse sur ceux-ci.

De plus, les bras de carter permettant le passage des premier et deuxième éléments d'arbres radiaux sont moins gros, et les pertes associées dans les veines primaire et secondaire sont réduites.

La chaine cinématique entre la turbine 15 et la soufflante 10 comprend ainsi l'arbre 16, la transmission radiale 200, le troisième élément d'arbre 110, le réducteur de vitesse 300 et l'arbre de soufflante 19.

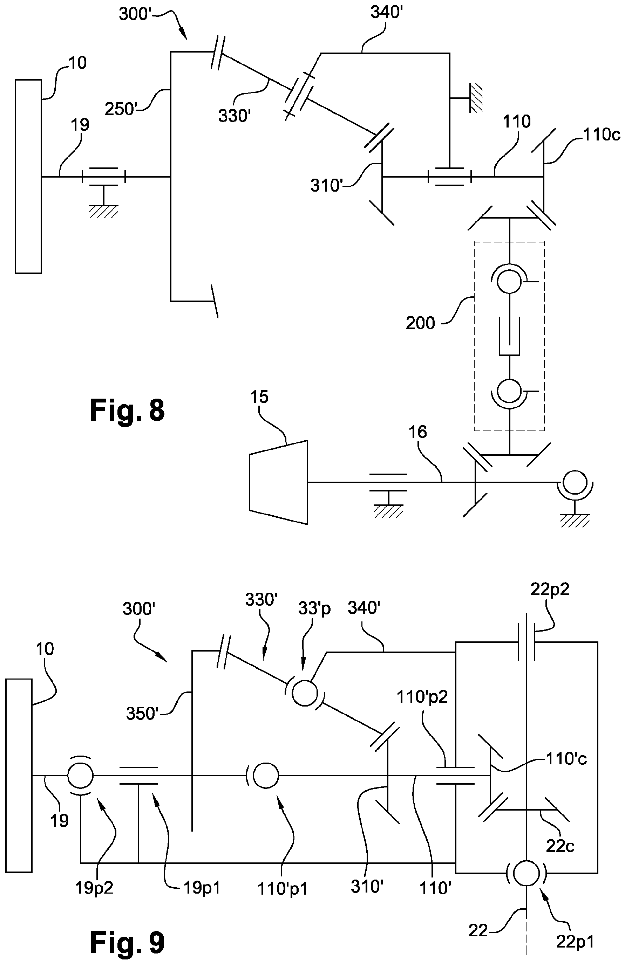

Au lieu d'un réducteur plan, on réduit l'encombrement radial de cet ensemble mécanique en disposant un réducteur, dit sphérique, dans lequel les satellites ont leur axe de rotation incliné par rapport à l'axe de la roue planétaire. Une telle variante est représentée sur la figure 8.

Les roues des satellites sont guidées en rotation et supportées par un châssis formant stator qui peut être agencé de manière à ce que les roues des satellites forment un angle avec l'axe de la turbine. L'angle d'inclinaison des roues de satellite est déterminé à iso encombrement axial par le rapport de réduction du réducteur de vitesse ensemble avec le rapport des diamètres primitifs entre satellites et couronne ainsi que par les contraintes de flexion et de pression admissibles dans les dents (l'augmentation du diamètre primitif du planétaire réduit les contraintes dans celui-ci à iso couple) et la longueur totale du réducteur.

En particulier, le réducteur 300' comprend un planétaire en entrée 310' et une couronne 350' en sortie pour entraîner l'arbre de soufflante. Les satellites sont montés sur un châssis 340' solidaire de la structure du moteur et leur axe de rotation au lieu d'être parallèle à l'axe du planétaire sont convergents avec celui-ci. L'inclinaison des satellites permet de réduire l'encombrement radial du réducteur par rapport à un dispositif où les axes seraient parallèles entre eux. Une telle inclinaison permet également d'obtenir un réducteur avec une forme conique ou sphérique ce qui optimise la place disponible dans le ou les modules de soufflante(s). Le réducteur sphérique permet un encombrement radial réduit pour le même rapport de réduction. Ces caractéristiques correspondent bien avec l'encombrement disponible en aval du moyeu de la soufflante, à l'intérieur de la veine de soufflante.

Comme dans le deuxième mode de réalisation précédent, on dispose avantageusement une transmission radiale 200 entre l'arbre de la turbine libre et le troisième élément d'arbre 110, qui peut absorber les déformations parasites de la structure en fonctionnement de l'ensemble de propulsion.

La figure 9 montre un ensemble de module de soufflante intégrant un exemple d'agencement des paliers pour un réducteur sphérique, à l'intérieur d'un élément de carter 340' fixe qui comprend notamment le porte-satellites.

Le deuxième élément d'arbre 220 radial de la transmission radiale, est supporté dans l'élément de carter 340' par le moyen de deux paliers 22 : un palier à billes 22p1 et un palier à rouleaux 22p2.

Le troisième élément d'arbre 110' comporte d'un côté le pignon conique 110'c du renvoi d'angle et de l'autre côté le planétaire 310' du réducteur 300'. Il est supporté d'un côté par un palier à rouleaux 110'p2 et de l'autre côté à l'intérieur du réducteur 300' par un palier inter arbre 110'p1. Le palier à rouleaux est disposé entre le pignon conique 110'c et le planétaire 310'. Le palier inter arbre est en bout de l'arbre 19 de soufflante qui est solidaire de la couronne 350'. L'arbre 19 de soufflante est également supporté par un double palier avec un roulement à rouleaux 19p1 et un roulement à billes 19p2. Les paliers radiaux voient des charges moins importantes. Les arbres radiaux voient un couple plus faible, il s'ensuit un gain en masse sur ce composant.

Selon une variante de réalisation au palier inter arbre contrarotatif entre l'arbre portant le pignon planétaire et le rotor de soufflante, on intègre un palier à billes dont la bague extérieure est portée par le carter et non un rotor. Le palier inter arbre contrarotatif peut aussi être le palier à rouleaux, de préférence, car la butée à billes serait alors plus près de l'engrènement conique, contribuant à la bonne qualité du transfert de puissance (peu de déplacements).

Les satellites 330' du réducteur, au nombre de trois par exemple, sont supportés de préférence par un palier à rouleaux sphériques qui assure un guidage satisfaisant tout en le rendant tolérants aux éventuels défaut d'alignement entre les deux arbres 19 et 110' au cours du fonctionnement de l'ensemble de propulsion.

Conformément à une variante de réalisation non représentée, et en fonction du besoin en matière de rapport de réduction, la couronne est liée au carter du module de soufflante et le porte satellite lié au rotor de la soufflante.

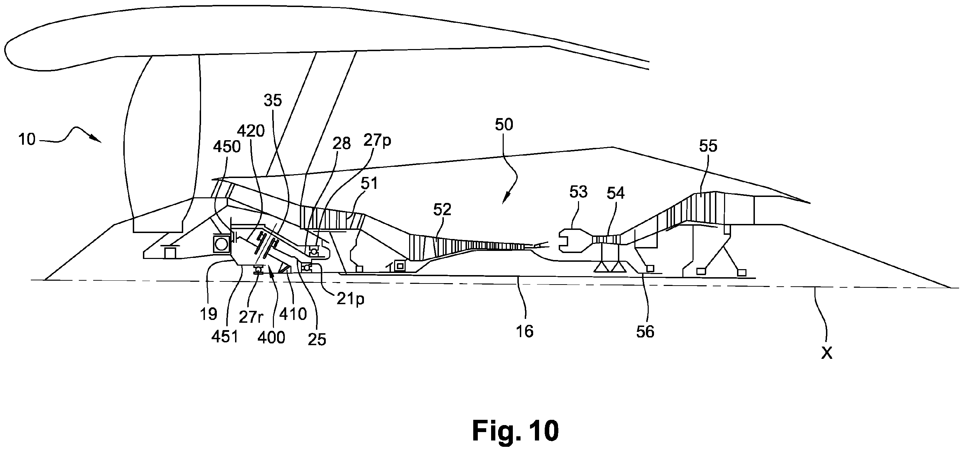

Sur la figure 10 est illustré un autre mode de réalisation d'un ensemble de propulsion d'une turbomachine d'aéronef. Les références numériques correspondantes des ensembles de propulsion décrits précédemment dans les premier et deuxième modes de réalisation sont conservées dans la suite dans la description.

Dans le présent exemple, l'ensemble de propulsion comprend un générateur de gaz 50, une soufflante 10 montée en amont du générateur de gaz 50 suivant un axe longitudinal X et un mécanisme de transmission de puissance. Le générateur de gaz 50 comprend d'amont en aval, un compresseur basse pression 51, un compresseur haute pression 52, une chambre de combustion 53, une turbine haute pression 54 et une turbine basse pression 55. La turbine basse pression 55 correspond à la turbine de puissance. Le compresseur basse pression 51 et la turbine basse pression 55 sont reliés par l'arbre de turbine basse pression. Le compresseur haute pression 52 et la turbine haute pression 54 sont reliés par un arbre 56 haute pression. Le mécanisme de transmission de puissance est agencé entre la soufflante 10 et la turbine 55. L'entraînement de la soufflante 10 est réalisé par l'arbre de soufflante 19 d'axe coaxial sensiblement avec l'arbre 16 de turbine 55.

Le mécanisme de transmission de puissance comprend également un réducteur de vitesse 400 de type épicycloïdal. Le réducteur 400 comprend un pignon planétaire 410, des satellites 420 et une couronne 450. Le pignon planétaire 410 forme l'entrée du réducteur et la couronne 450 la sortie du réducteur. En particulier, le pignon planétaire 410 est relié à l'arbre 16 de turbine et la couronne 450 est reliée à l'arbre de soufflante 19. Le pignon planétaire 410 engrène avec une roue de satellite 420. Cette dernière engrène sur la couronne 450 laquelle entraîne l'arbre de soufflante 19. L'axe de rotation des roues satellites est également incliné par rapport à l'axe du pignon planétaire. L'axe du pignon planétaire est coaxial à l'axe de la turbine 16.

L'arbre du pignon planétaire 410 est situé dans le prolongement de l'arbre 16 de turbine auquel il est relié par un accouplement à cannelures. Le pignon planétaire est supporté par un palier 21p formant également butée axiale. De manière avantageuse, le palier 21p est un palier à billes. Le palier 21p est logé dans le châssis 25 support des satellites. La bague intérieure du palier 21p est portée par l'extrémité distale de l'arbre du pignon planétaire 410 et la bague extérieure est portée par le châssis 25. Le châssis est lui-même solidaire de la virole de carter 35 fixe et relié au carter d'entrée de la turbomachine.

La couronne 450 de forme cylindrique est montée à rotation via un palier 27p solidaire de la structure fixe du moteur. La virole tournante 28 comprenant la couronne 450 est montée à rotation à l'intérieur de la virole 35 dans le 27p. De manière avantageuse, mais non limitative, le palier 27p est un palier à billes. Le palier 27p, disposé en extrémité axiale du réducteur, est agencé pour former également une butée axiale. En particulier, la bague intérieure du palier 27p est portée par la virole tournante 28 et la bague extérieure est portée par la virole 35.

La couronne 450 comprend également la portée cylindrique intérieure recouvrant au moins partiellement l'arbre du pignon planétaire 410 et prenant un appui rotatif sur lui par l'intermédiaire du palier 27r, ici à rouleaux. Le palier 27r est disposé vers l'extrémité distale de la portée cylindrique intérieure 451. La bague extérieure du palier 27r est portée par la portée cylindrique intérieure 450 et la bague intérieure est portée par le pignon planétaire 410.

Une telle configuration permet de réduire également l'encombrement radial.

## Revendications

1. Ensemble de propulsion d'un aéronef comprenant au moins une turbine (15 ; 55), au moins une soufflante (10) et un mécanisme de transmission de puissance entre la turbine et la soufflante, le mécanisme de transmission de puissance comprenant un réducteur de vitesse (20 ; 300 ; 300' ; 400) avec une entrée et une sortie de mouvement, l'entrée étant reliée à ladite au moins une turbine (15 ; 55) et la sortie reliée à ladite au moins une soufflante (10), le réducteur de vitesse (20 ; 300 ; 300'; 400) étant un réducteur épicycloïdal avec un pignon planétaire (21 ; 310; 310' ; 410), des satellites (23 ; 330 ; 330' ; 420) et une couronne (27 ; 350 ; 350' ; 450), le pignon planétaire formant l'entrée et la couronne formant la sortie du réducteur, et l'axe de rotation des satellites (23 ; 330 ; 330' ; 420) étant incliné par rapport à l'axe du pignon planétaire (21 ;310 ;310' ; 410), **caractérisé en ce que** des roues formant les satellites (23) engrènent d'une part sur des dents du pignon planétaire (21) et d'autre part sur des dents de la couronne formant une zone annulaire (27c1) centrée sur l'axe de l'arbre (16) de turbine.

2. Ensemble selon la revendication précédente, **caractérisé en ce que** la soufflante (10) est d'axe décalé par rapport à l'axe de la turbine (15 ; 55).

3. Ensemble selon la revendication 1, **caractérisé en ce que** la soufflante (10) est d'axe coaxial avec l'axe de la turbine (15 ; 55).

4. Ensemble selon l'une des revendications précédentes, **caractérisé en ce que** l'entrée du réducteur de vitesse est dans le prolongement de l'axe de la turbine.

5. Ensemble selon l'une des revendications précédentes, **caractérisé en ce que** la couronne (27 ; 350 ; 350' ; 450) comprend une première zone annulaire dentée (27c1) engrenant avec les roues satellites (23 ; 330; 330'; 420) et une deuxième zone annulaire dentée (27c2) formant la sortie du réducteur de vitesse.

6. Ensemble selon l'une des revendications précédentes, **caractérisé en ce que** la deuxième zone annulaire dentée (27c2) est de rayon inférieur à celui de la première zone annulaire dentée (27c1).

7. Ensemble selon l'une quelconque des revendications précédentes, **caractérisé en ce que** le mécanisme de transmission de puissance comprend au moins un arbre intermédiaire (18) orienté selon une direction radiale par rapport à l'axe de la turbine, l'arbre intermédiaire (18) engrenant avec la sortie du réducteur de vitesse (20).

8. Ensemble selon l'une quelconque des revendications 1 à 2, **caractérisé en ce que** le mécanisme de transmission de puissance comprend deux joints homocinétiques (23c1, 23c2).

9. Ensemble selon la revendication précédente, **caractérisé en ce que** le mécanisme de transmission de puissance comprend un premier élément d'arbre (210) intermédiaire orienté selon une direction radiale par rapport à l'axe de la turbine (15), le premier élément d'arbre (210) intermédiaire engrenant sur l'arbre (16) de la turbine.

10. Ensemble selon la revendication précédente, **caractérisé en ce que** le mécanisme de transmission de puissance comprend un deuxième élément d'arbre (220) intermédiaire radial, entre ledit premier élément d'arbre (210) intermédiaire et le deuxième élément d'arbre (220) intermédiaire étant agencée une liaison comprenant les deux joints (23c1, 23c2) homocinétiques.

11. Ensemble selon la revendication précédente, **caractérisé en ce que** la liaison entre les deux premier et deuxième éléments d'arbre comprend une liaison (23g) à glissière disposée en série avec les deux joints homocinétiques.

12. Ensemble selon l'une quelconque des revendications précédentes, **caractérisé en ce que** la turbine est entraînée par un générateur de gaz.

13. Ensemble selon la revendication précédente, **caractérisé en ce que** le générateur de gaz est un moteur à turbine à gaz avec un carter d'échappement comprenant deux viroles concentriques, l'une interne l'autre externe, définissant la veine des gaz moteurs en aval de la turbine.

14. Ensemble selon la revendication précédente, **caractérisé en ce que** le réducteur étant logé à l'intérieur de la virole interne.

15. Ensemble selon les revendications 7 et 13, **caractérisé en ce que** l'arbre intermédiaire (18) traverse les viroles du carter d'échappement.

16. Ensemble selon la revendication précédente, **caractérisé en ce que** le premier élément d'arbre (210) intermédiaire traverse les viroles du carter d'échappement.

## Patentansprüche

1. Antriebseinheit eines Flugzeugs, umfassend mindestens eine Turbine (15; 55), mindestens ein Gebläse (10) und einen Leistungsübertragungsmechanismus zwischen der Turbine und dem Gebläse, wobei der Leistungsübertragungsmechanismus einen Geschwindigkeitsreduktor (20; 300; 300'; 400) mit einem Bewegungseingang und -ausgang umfasst, wobei der Eingang an die mindestens eine Turbine (15; 55) angeschlossen ist und der Ausgang an das mindestens eine Gebläse (10) angeschlossen ist, wobei der Geschwindigkeitsreduktor (20; 300; 300'; 400) ein epizyklischer Reduktor mit einem Planetenrad (21; 310; 310'; 410), Satelliten (23; 330; 330'; 420) und einer Krone (27; 350; 350'; 450) ist, wobei das Planetenrad den Eingang bildet, und die Krone den Ausgang des Reduktors bildet, und die Drehachse der Satelliten (23; 330; 330'; 420) in Bezug auf die Achse des Planetenrades (21; 310; 310'; 410) geneigt ist, **dadurch gekennzeichnet, dass** die Satelliten (23) bildende Räder einerseits in Zähne des Planetenrades (21), und andererseits in Zähne der Krone eingreifen, die eine ringförmige Zone (27c1) bildet, die auf der Achse der Turbinenwelle (16) zentriert ist.

2. Einheit nach dem vorstehenden Anspruch, **dadurch gekennzeichnet, dass** das Gebläse (10) in Bezug auf die Achse der Turbine (15; 55) versetzt ausgerichtet ist.

3. Einheit nach Anspruch 1, **dadurch gekennzeichnet, dass** das Gebläse (10) in Bezug auf die Achse der Turbine (15; 55) koaxial ausgerichtet ist.

4. Einheit nach einem der vorstehenden Ansprüche, **dadurch gekennzeichnet, dass** der Eingang des Geschwindigkeitsreduktors in der Verlängerung der Turbinenachse ist.

5. Einheit nach einem der vorstehenden Ansprüche, **dadurch gekennzeichnet, dass** die Krone (27; 350; 350'; 450) eine erste verzahnte ringförmige Zone (27c1), die in die Satellitenräder (23; 330; 330'; 420) eingreift, und eine zweite verzahnte ringförmige Zone (27c2), die den Ausgang des Geschwindigkeitsreduktors bildet, umfasst.

6. Einheit nach einem der vorstehenden Ansprüche, **dadurch gekennzeichnet, dass** die zweite verzahnte ringförmige Zone (27c2) mit einem Radius kleiner als jenem der ersten verzahnten ringförmigen Zone (27c1) ist.

7. Einheit nach einem der vorstehenden Ansprüche, **dadurch gekennzeichnet, dass** der Leistungsübertragungsmechanismus mindestens eine Zwischenwelle (18) umfasst, die gemäß einer radialen Richtung in Bezug auf die Achse der Turbine orientiert ist, wobei die Zwischenwelle (18) in den Ausgang des Geschwindigkeitsreduktors (20) eingreift.

8. Einheit nach einem der Ansprüche 1 bis 2, **dadurch gekennzeichnet, dass** der Leistungsübertragungsmechanismus zwei homokinetische Dichtungen (23c1, 23c2) umfasst.

9. Einheit nach dem vorstehenden Anspruch, **dadurch gekennzeichnet, dass** der Leistungsübertragungsmechanismus ein erstes Zwischenwellenelement (210) umfasst, das gemäß einer radialen Richtung in Bezug auf die Achse der Turbine (15) orientiert ist, wobei das erste Zwischenwellenelement (210) in die Welle (16) der Turbine eingreift.

10. Einheit nach dem vorstehenden Anspruch, **dadurch gekennzeichnet, dass** der Leistungsübertragungsmechanismus ein zweites radiales Zwischenwellenelement (220) umfasst, wobei zwischen dem ersten Zwischenwellenelement (210) und dem zweiten Zwischenwellenelement (220) eine Verbindung angeordnet ist, die die beiden homokinetischen Dichtungen (23c1, 23c2) umfasst.

11. Einheit nach dem vorstehenden Anspruch, **dadurch gekennzeichnet, dass** die Verbindung zwischen den beiden ersten und zweiten Wellenelementen eine Verbindung (23g) mit Gleitschiene umfasst, die in Reihe mit den beiden homokinetischen Dichtungen angeordnet ist.

12. Einheit nach einem der vorstehenden Ansprüche, **dadurch gekennzeichnet, dass** die Turbine durch einen Gasgenerator angetrieben wird.

13. Einheit nach dem vorstehenden Anspruch, **dadurch gekennzeichnet, dass** der Gasgenerator ein Gasturbinenmotor mit einem Abgasgehäuse ist, der zwei konzentrische Mäntel, der eine innen, der andere außen, umfasst, die den Strom der Motorgase stromabwärts der Turbine definieren.

14. Einheit nach dem vorstehenden Anspruch, **dadurch gekennzeichnet, dass** der Reduktor im Inneren des inneren Mantels eingesetzt ist.

15. Einheit nach den Ansprüchen 7 und 13, **dadurch gekennzeichnet, dass** die Zwischenwelle (18) die Mäntel des Abgasgehäuses durchquert.

16. Einheit nach dem vorstehenden Anspruch, **dadurch gekennzeichnet, dass** das erste Zwischenwellenelement (210) die Mäntel des Abgasgehäuses durchquert.

## Claims

1. Aircraft propulsion assembly comprising at least one turbine (15; 55), at least one fan (10) and a device for transmitting power between the turbine and the fan, the power transmission device comprising a speed reducer (20; 300; 300'; 400) having a motion inlet and a motion outlet, the inlet being connected to the turbine (15; 55) and the outlet being connected to the fan (10), the speed reducer (20; 300; 300'; 400) being an epicyclical reducer having a sun gear (21; 310; 310'; 410), rocker gears (23; 330; 330'; 420) and a crown (27; 350; 350', 450), the sun gear forming the inlet and the crown forming the outlet of the reducer, and the rotation axis of the rocker gears (23; 310; 310'; 420) being inclined with regard to the axis of the sun gear (21; 310; 310'; 410), **characterized in that** wheels forming the rocker gears (23) mesh on the one hand on the teeth of the sun gear (21) and on the other hand on teeth of the ring forming an annular zone (27c1) centered on the axis of the turbine shaft.

2. Assembly according to the preceding claim, **characterised in that** the fan (10) is of offset axis with regard to the axis of the turbine (15; 55).

3. Assembly according to claim 1, **characterised in that** the fan (10) is of coaxial axis with the axis of the turbine (15; 55).

4. Assembly according to one of the preceding claims, **characterised in that** the inlet of the speed reducer is in line with the axis of the turbine.

5. Assembly according to one of the preceding claims, **characterised in that** the crown (27; 350; 350'; 450) comprises a first ring-shaped toothed zone (27c1) meshing with the wheels of the rocker gears (23; 330; 330'; 420) and a second ring-shaped toothed zone (27c2) forming the outlet of the speed reducer.

6. Assembly according to the one of the preceding claims, **characterised in that** the second ring-shaped toothed zone (27c2) is of smaller radius than that of the first ring-shaped toothed zone (27c1).

7. Assembly according to any one of the preceding claims, **characterised in that** the power transmission device comprises at least one intermediate shaft (18) oriented in accordance with a radial direction with regard to the axis of the turbine, the intermediate shaft (18) engaging with the outlet of the speed reducer (20).

8. Assembly according to either one of claims 1 to 2, **characterised in that** the power transmission device comprises two homo-kinetic joints (23c1, 23c2).

9. Assembly according the preceding claim, **characterised in that** the power transmission device comprises a first intermediate shaft element (210) oriented in accordance with a radial direction with regard to the axis of the turbine (15), the first intermediate shaft element (210) engaging with the turbine shaft (16).

10. Assembly according to the preceding claim, **characterised in that** the power transmission device comprises a second intermediate radial shaft element (220), wherein a link comprising the two homo-kinetic joints (23c1, 23c2) is arranged between said first intermediate shaft element (210) and the second intermediate shaft element (220) .

11. Assembly according to the preceding claim, **characterised in that** the link between the two first and second shaft elements comprises a slider link (23g) arranged in series with the two homo-kinetic joints.

12. Assembly according to any one of the preceding claims, **characterised in that** the turbine is driven by a gas generator.

13. Assembly according to the preceding claim, **characterised in that** the gas generator is a gas turbine engine having an exhaust casing comprising two concentric ferrules, one internal, one external, defining the engine gas flow downstream of the turbine.

14. Assembly according to the preceding claim, **characterised in** the reducer is housed within the internal ferrule.

15. Assembly according to claims 7 and 13 **characterised in that** the intermediate shaft (18) traverses the ferrules of the exhaust casing.

16. Assembly according to the preceding claim, **characterised in that** the first intermediate shaft element (210) traverses the ferrules of the exhaust casing.
